Europäisches Patentamt

European Patent Office

Office européen des brevets

(19)

(11) Numéro de publication: **0 201 367 B1**

## FASCICULE DE BREVET EUROPEEN

(12)

(45) Date de publication de fascicule du brevet:
**07.08.91**

(51) Int. Cl.⁵: **C08J 5/06**, C08K 7/14

(21) Numéro de dépôt: **86400605.1**

(22) Date de dépôt: **21.03.86**

Le dossier contient des informations techniques présentées postérieurement au dépôt de la demande et ne figurant pas dans le présent fascicule.

(54) **Matériau composite polymère thermoplastique renforcé de fibres.**

(30) Priorité: **25.03.85 FR 8504374**

(43) Date de publication de la demande:
**12.11.86 Bulletin 86/46**

(45) Mention de la délivrance du brevet:
**07.08.91 Bulletin 91/32**

(84) Etats contractants désignés:
**AT BE CH DE FR GB IT LI LU NL SE**

(56) Documents cités:
**EP-A- 0 102 145**
**FR-A- 1 578 394**
**GB-A- 1 094 439**
**US-A- 3 863 758**

(73) Titulaire: **ATOCHEM**
**4 & 8, Cours Michelet La Défense 10**
**F-92800 Puteaux(FR)**

(72) Inventeur: **Glemet, Michel**
**Rue Max Carpentier**
**F-27470 Serquigny(FR)**

(74) Mandataire: **Foiret, Claude et al**
**ATOCHEM, Département Propriété Industriel-**
**le, La Défense 10, Cédex 42**
**F-92091 Paris La Défense(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 201 367 B1

## Description

La présente invention concerne un matériau composite polymère thermoplastique renforcé de fibres dans lequel la liaison intime entre le polymère et les fibres est assurée par un second polymère thermoplastique, compatible avec le premier, favorisant le mouillage des fibres. Ce matériau composite est fabriqué en revêtant les fibres d'un second polymère thermoplastique favorisant le mouillage, le premier polymère thermoplastique d'enrobage adhérant à chaud à ce polymère favorisant le mouillage.

Il est connu des brevets français 2 414 995 et 2 463 221, de fabriquer des composites à base de polymère thermoplastique renforcé de fibres, mais dans tous les cas le polymère thermoplastique d'enrobage est directement mis en contact avec la fibre. Il a été constaté que les thermoplastiques standards utilisés dans ce genre d'application ne possèdent pas les qualités de mouillage suffisantes pour assurer un contact intime avec les fibres. Il en résulte un composite possédant une structure relativement hétérogène, ce qui entraine nécessairement un affaiblissement des propriétés mécaniques du produit final. Sans chercher à améliorer cette hétérogénéité il est proposé dans le brevet français 1 578 394, afin de protéger les fibres organiques utilisées ultérieurement comme charges, de les enrober d'un polymère par trempage dans une solution de ce polymère, élimination du solvant et granulage de l'ensemble séché. Ces granulés sont ensuite associés au même polymère non chargé pour fabriquer le composite. Cette méthode compliquée et destructrice des fibres n'améliore en rien leur contact intime avec le polymère par rapport aux techniques des deux brevets précédents.

Il a également été proposé dans le brevet des Etats Unis d'Amérique 3 863 758, toujours pour protéger les fibres et éviter leur destruction au moulage de préparer un sandwich préalable constitué de fibres enrobées de poudres de polymère l'ensemble étant ensaché dans des films du même polymère. Ce sandwich est ensuite moulé tel quel pour former un composite. Là encore s'agissant d'un seul et même polymère standard enrobant les fibres, se posent les mêmes problèmes que dans le cas des brevets 2 414 995 et 2 463 221.

Dans le GB-A-1 094 439 est décrit un renforcement des fibres de verre, avant tout revêtement par une résine plastique, au moyen d'un traitement préalable au moyen d'un polymère de propylène modifié spécifiquement par un acide dicarboxylique ou un anhydride correspondant, par une amide ou encore par un ester. Bien qu'améliorant le mouillage des fibres, ce copolymère modifié possède une trop forte viscosité pour rendre totalement satisfaisant le mouillage des fibres.

Le composite selon l'invention possède des propriétés mécaniques améliorées du fait de l'interposition entre le polymère thermoplastique standard et les fibres d'un second polymère thermoplastique favorisant le mouillage. Ce second polymère, compatible avec le premier polymère, enrobe soigneusement les fibres et pénètre intimement à l'intérieur des mats, ce qui, du fait par ailleurs de sa compatibilité avec le polymère standard, permet d'assurer la réalisation d'un composite homogène. Il s'avère que l'association de deux polymères soigneusement choisis améliore nettement les propriétés des composites.

Il est indispensable, pour assurer l'homogénéité du composite que les deux polymères thermoplastiques soient compatibles. Cette compatibilité est un caractère dont la définition scientifique n'a jamais été donnée de façon tout à fait satisfaisante, bien que son importance pratique soit considérable et qu'il soit bien connu de l'homme de l'art. Sans entrer dans les détails fort controversés de miscibilité réciproque partielle des polymères considérés, on estime ici que deux polymères sont compatibles s'il est possible de les mélanger de façon à obtenir une matière présentant une tenue mécanique voisine de, ou supérieure à celle du plus faible d'entre eux. Selon cette définition et à titre d'exemples les couples

- Polyéthylène haute densité greffé - polyéthylène basse densité
- Polyéthylène haute densité greffé - copolymère éthylène-acétate de vinyle (EVA)
- EVA greffé - polychlorure de vinyle
- Polypropylène greffé - polypropylène
- Copolymère séquencé poly(éther-amide)-polyamide
- Polyamide fonctionnalisé (par exemple $\alpha$ , $\omega$ diamines, $\alpha,\omega$ diacides, $\alpha$ amine $\omega$ acide, mono amine) -polyamide
- EVA modifié - EVA ou polyéthylène basse densité (PEbd)
- Polyéthylène basse densité linéaire (PFbdl) greffé - PEbd1 ou PEbd

sont compatibles tandis qu'un homopolymère de chlorure de vinyle et un homopolymère de styrène sont incompatibles.

Il est également nécessaire d'avoir à l'interface polymère standard-fibres du composite un second polymère thermoplastique possédant une grande aptitude à mouiller les fibres de renfort permettant une

2

EP 0 201 367 B1

bonne liaison interfaciale. En fait on entend par polymère thermoplastique favorisant le mouillage, un polymère permettant d'augmenter la surface de contact intime fibre-polymère jouant ainsi le rôle d'agent de couplage. Les rôles des agents de couplage sont expliqués dans Polymer Engineering Composite, M.O.W. Richardson - Appl. Sc. Publ. 1977, les plus connus étant les organosilanes. Parmi les polymères thermoplastiques favorisant le mouillage certains sont connus pour posséder des propriétés adhésives, mais aussi beaucoup d'autres ne possèdent-ils pas ces propriétés. Dans le cas de la présente invention ces propriétés ne présentent pas d'intérêt particulier. En effet s'il est évident que pour faire adhérer un revêtement sur une surface, par exemple métallique, il soit nécessaire d'utiliser un primaire de collage, dans la technique de fabrication des matériaux composites thermoplastiques à renforcement filamentaire, ce besoin n'a jamais eu à être considéré. Dans ce type de matériaux il a toujours été admis que les fibres se trouvant en contact intime avec les résines n'ont pas besoin d'autres propriétés d'adhérence que celles conférées par les techniques classiques d'ensimage. Or ces techniques ne modifient que l'état de surface des fibres sans agir sur le polymère d'enrobage. Selon la technique de l'invention on ne pouvait s'attendre à un quelconque avantage à interposer un tiers polymère, soigneusement sélectionné, entre les fibres et le polymère d'enrobage.

Le polymère thermoplastique favorisant le mouillage est habituellement choisi parmi les polymères de basse viscosité, et les polymères dont la polarité est accrue par rapport aux polymères correspondants d'origine, n'étant pas exclu qu'un même polymère puisse posséder ces deux caractéristiques.

Le polymère de basse viscosité est de préférence un polymère dont la viscosité de fusion (Of + 40°C) est au plus égale à celle d'un polypropylène d'indice de fluidité 20 (Melt Index) à 230°C sous 2,16 Kg selon la norme ASTM D 1238.

Parmi les polymères de basse viscosité, on peut citer les polymères résultant de la polyaddition d'un oligomère polyamide fonctionnalisé avec un coréactif tel que par exemple un polyépoxy ou un polyisocyanate, ou, d'un oligomère polypropylène fonctionnalisé avec un coréactif tel que par exemple un polyéther diol, ou, un polyamide $\alpha$, $\omega$ diamine.

Parmi les polymères dont la polarité est accrue par rapport aux polymères correspondants d'origine, on peut citer les copolymères séquencés poly(éther-amide)

Le procédé de fabrication du matériau composite polymère thermoplastique renforcé de fibres de l'invention consiste à interposer entre les fibres et le polymère thermoplastique un polymère thermoplastique, caractérisé en ce qu'il s'agit d'un second polymère compatible avec le premier, favorisant le mouillage des fibres et en ce que l'ensemble est fixé à chaud.

Un procédé préféré consiste à imprégner les fibres, sous forme de fils, tissu, mat ou autres, de polymère favorisant le mouillage. Cette imprégnation se fait par tout moyen connu.

Bien que l'on puisse imprégner les fibres par voie humide en les traitant par une dispersion ou une solution de polymère puis en les séchant afin d'éliminer le liquide de dispersion ou le solvant, on préfère effectuer l'imprégnation par voie sèche en utilisant le polymère thermoplastique favorisant le mouillage sous forme de poudre. On peut dans ce cas utiliser la technique qui consiste à saupoudrer les fibres, à partir par exemple d'une trémis vibrante de polymère sous forme de poudre dont le diamètre moyen des particules est inférieur à 400 $\mu$m (micromètres). On peut encore imprégner les fibres en les faisant passer dans un lit fluidisé, le diamètre moyen des particules de polymère étant dans ce cas de préférence inférieur à 125 $\mu$m.

Les fibres imprégnées de poudre sont ensuite revêtues à chaud du polymère thermoplastique standard. Ce revêtement peut se faire selon les techniques connues par exemple soit par mise en contact de film, plaque ou autres, de polymère et des fibres imprégnées de poudre, puis traitement à chaud sous pression de l'ensemble, soit encore par pultrusion en faisant passer les fibres imprégnées de poudre dans une filière tête d'équerre alimentée grâce à une extrudeuse, en polymère thermoplastique standard.

Un autre procédé préféré consiste à revêtir les fibres à chaud du polymère favorisant le mouillage sous forme de film ou plaque, préalablement préparé, puis à recouvrir cette couche de polymère de polymère standard. L'opération peut s'effectuer simplement en déposant sur les fibres un film ou plaque des deux polymères, selon l'invention, obtenus par exemple par coextrusion, la face constituée du polymère favorisant le mouillage étant bien entendu en contact avec les fibres, puis à assembler l'ensemble à chaud sous pression.

Plus simplement on peut revêtir une fibre ou mèche directement par coextrusion en filière tête d'équerre, de deux résines thermoplastiques, le polymère thermoplastique assurant le mouillage constituant la couche interne de la gaine en contact avec la fibre.

Les fibres principalement utilisées dans l'invention sont les fibres minérales telles que fibres de silice, et surtout de verre, sans exclusion toutefois des fibres synthétiques ou artificielles.

Les matériaux composites de l'invention peuvent être utilisés tels quels sous forme de feuilles ou de plaques. Ils peuvent également être mis en forme selon les méthodes de transformation classiques des

3

polymères thermoplastiques comme par exemple le calan-drage, l'estampage, le thermoformage, l'enroulement filamentaire ou encore par moulage ou par estampage après réduction en petits morceaux adéquats.

Les exemples suivants, sans être limitatifs, illustrent l'invention.

EXEMPLE 1

On réalise au moyen d'une extrudeuse Brabender équipée d'une double vis, 42,4 mm de diamètre, un mélange d'un oligomère de polyamide 11 $\alpha,\omega$ diamines de masse molaire Mn = 1535 et d'un coréactif du type diglycyl éther du bisphénol A (Epikote® 1001 SHELL) dans les proportions en masse :

oligomère polyamide    61 %
coréactif              39 %

Le compound obtenu est ensuite broyé en une poudre fine de granulométrie = 100 $\mu$m puis étuvé sous vide.

Sur un mat de fibres longues de verre (Owens Corning Fiberglas 8610-900 g/m²) on dépose par saupoudrage la poudre fine ainsi obtenue. Le mat de fibres de verre imprégné de poudre est ensuite placé entre deux feuilles préextrudées de polyamide 11 (Rilsan® BMN noir TLD - ATOCHEM) de 0,5 mm d'épaisseur.

On empile de manière identique jusqu'à trois mats de fibres de verre. L'ensemble est préchauf fé à 220˚C pendant 3 minutes entre les plateaux d'une presse, puis comprimé à la même température sous 25 bars pendant 10 minutes. L'ensemble est ensuite refroidi sous pression jusqu'à 80˚C. On obtient un composite de 3,5 mm d'épaisseur.

A titre comparatif on prépare dans les mêmes conditions un composite de structure identique, à partir uniquement de mat de fibres de verre et de feuille polyamide 11 (Rilsan® - BMN noir TLD) l'épaisseur des couches de PA 11 étant telle qu'on tient compte de l'absence de systèmes réactifs en poudre, et que l'épaisseur finale du composite soit sensiblement de 3,5 mm.

Les résultats des essais mécaniques réalisés sur ces produits sont donnés dans le tableau suivant :

| | | Essai comparatif |
|---|---|---|
| % fibres de verre massique | 45 | 45 |
| TRACTION | - | |
| Résistance à rupture MPa | 145 | 119 |
| FLEXION | | |
| Contrainte maxi MPa | 208 | 173 |
| Module d'élasticité MPa | 8209 | 6539 |

## Revendications

1. Matériau composite polymère thermoplastique renforcé de fibres, un second polymère thermoplastique différent du premier et compatible avec lui, favorisant le mouillage des fibres se trouvant interposé entre ce premier polymère thermoplastique et les fibres caractérisé en ce que le second polymère thermoplastique est choisi parmi les polymères résultant de la polyaddition d'un oligomère polyamide fonctionnalisé avec un corréactif du type poly-époxy ou polyisocyanate, parmi les polymères résultant de la polyaddition d'un oligomère polypropylène fonctionnalisé avec un coréactif du type polyéther diol ou le polyamide α,ω diamine ainsi que les copolymères séquencés poly (éther-amide).

## Claims

1. Fibre-reinforced thermoplastic polymeric composite material, a second thermoplastic polymer other than the first and compatible with it promoting the wetting of the fibres being placed between this first thermoplastic polymer and the fibres, characterised in that the second thermoplastic polymer is chosen from polymers resulting from the polyaddition of a functionalised polymide oligomer with a coreactant of the polypoxy or poly-isocyanate type, from polymers resulting from the poly-addition of a functionalised Polypropylene oligomer with a coreactant of the polyetherdiol or α,ω-diamine polyamide type and poly(ether-amide) block copolymers.

## Patentansprüche

1. Polymeres thermoplastisches, mit Fasern verstärktes Verbundmaterial, bei dem ein zweites, vom ersten verschiedenes und mit diesem verträgliches thermoplastische Polymere, das das Benetzen der Fasern begünstigt, zwischen diesem ersten thermoplastischen Polymeren und den Fasern angeordnet ist, dadurch gekennzeichnet, daß das zweite thermoplastische Polymere ausgewählt wird aus den Polymeren, die durch Polyaddition eines Polyamid-Oligomeren mit funktionellen Gruppen mit einem Coreaktionspartner vom Typ Poly-epoxy- oder Polyisocyanat erhalten werden, aus den Polymeren, die durch Polyaddition eines Polypropylen-Oligomeren mit funktionellen Gruppen mit einem Coreaktionspartner vom Typ Polyetherdiol oder aus einem α,ω-Diamin Polyamid sowie den Poly(ether-amid) Blockcopolymeren.